# EUROPEAN PATENT SPECIFICATION

(11) **EP 0 760 828 B1**
(45) Date of publication and mention of the grant of the patent: **23.05.2001**
(21) Application number: 95917179.4
(22) Date of filing: 27.04.1995
(51) Int. Cl.: C08J 5/18, B29C 65/00

(54) **IMPROVED PROPYLENE COPOLYMER HEAT SEAL RESIN AND ARTICLES THEREFROM**
VERBESSERTES HEISSIEGELHARZ AUS PROPYLEN-COPOLYMER UND ARTIKEL DARAUS
RESINE THERMO-SCELLABLE DE COPOLYMERE DE PROPYLENE AMELIOREE ET ARTICLES OBTENUS A PARTIR DE CETTE RESINE

(30) Priority: 24.05.1994 US 248112
(43) Date of publication of application: 12.03.1997
(73) Proprietor: EXXON CHEMICAL PATENTS INC., Baytown, TX 77522 (US)
(72) Inventor: MCALPIN, James, John, Houston, TX 77058 (US); MEHTA, Aspy, Keki, Humble, TX 77346 (US); STAHL, Glenn, Allen, Humble, TX 77346 (US)
(74) Representative: Dew, Melvyn John
(86) International application number: US9505193
(87) International publication number: WO9532235

(56) References cited:
- EP-A- 0 495 099
- EP-A- 0 538 749
- EP-A- 0 588 208

## Description

### FIELD OF THE INVENTION:

This invention relates generally to heat sealed articles. More specifically, this invention relates to articles produced from copolymers of metallocene catalyzed propylene and at least one other monomer tailored to have advantageous heat seal, hot tack, and stiffness characteristics relative to articles produced from Ziegler-Natta catalyzed polypropylene copolymers.

### BACKGROUND OF THE INVENTION:

A variety of plastic films are used in packaging applications such as bags, pouches, tubs and trays. In many of these applications, it is important that the plastic film be readily heat sealable and possess other physical and mechanical properties such as resistance to tearing, tensile strength, and processability in high speed equipment.

Oriented polypropylene films are useful and widely accepted packaging films because of their good moisture barrier, stiffiless, high strength, and optical properties. However, films of polypropylene do not, in general, exhibit good heat sealing properties which is an important consideration in packaging applications. This is generally because polypropylene films have narrow sealing temperature ranges and melt at high temperatures.

The heat sealing behavior of polyolefins, and particularly polypropylene copolymers has been studied extensively in the last few years. Seal initiation temperature (SIT) and plateau initiation temperature (PIT) of polypropylene films have been correlated with melting point behavior. It is well known that the melting point of polypropylene may be depressed by the addition of comonomer during the polymerization reaction. This phenomena holds regardless of polymerization catalyst, i.e., Ziegler-Natta or metallocene catalyst employed. See EPA 318049, and EPA 495099.

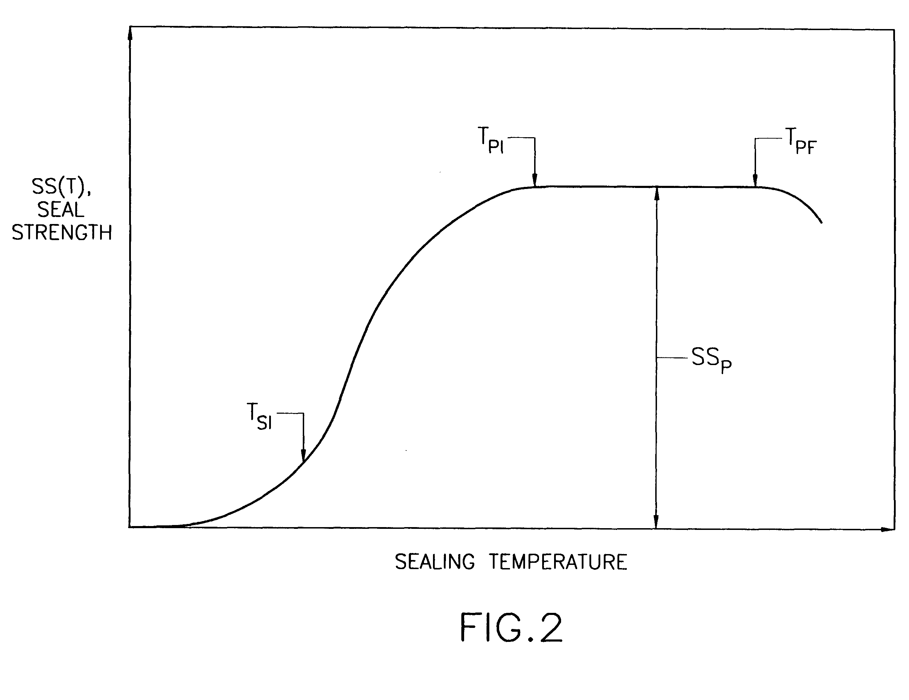

EPA '099 discloses propylene-alpha-olefin random copolymers having from 1-10 mole % alpha-olefin. Copolymers of Ziegler-Natta and metallocene-catalyzed polypropylene having the same or similar comonomer content were compared and evaluated for melting point decrease. Figure 2 of '099 illustrates a linear relationship between melting point of the polypropylene copolymer and comonomer content. It is illustrated that melting point decreases linearly as comonomer content increases. The slope of the line shown for metallocene-catalyzed polypropylene is substantially identical to that for Ziegler-Natta catalyzed polypropylene, however, the metallocene line is shown to be 10-20°C lower than the Ziegler-Natta catalyzed polypropylene line. EPA '099 does not teach or suggest any distinctions between a particular comonomer and melting point effects.

EP-A-0 538 749 discloses film made from blends of metallocene catalyzed propylene copolymers with Ziegler-Natta catalyzed propylene copolymers. EPA '749 suggests that films made primarily from metallocene catalyzed propylene copolymer have surface roughness which renders the films unusable.

It is desirable to have films which may be scaled at as low a temperature as possible. Being able to operate a packaging line at even a few degrees less than current line temperature results in savings due to increased productivity. It would be desirable to develop a polypropylene film, or article, which may be scaled at lower temperatures yet maintain all other or commercially attractive physical properties.

### SUMMARY OF THE INVENTION:

This invention relates to the discovery that metallocene catalyzed polypropylene copolymers have lower plateau initiation temperatures than correspondingly similar melting point copolymers having the same comonomer produced by conventional Ziegler-Natta catalysts. At similar melting points, the metallocene catalyzed copolymers were also found to exhibit higher tensile modulus values relative to the corresponding Ziegler-Natta catalyzed polypropylene copolymers. This yields important process and product benefits. An advantage of films and articles made in accordance with the present invention includes greater stiffness character, yet sealable at lower temperatures than currently available with today's films and articles. It has also been found that the PIT for the metallocene copolymers described herein is 10°C to 25°C less than the melting temperature (Tm) of the copolymer.

According to the invention, there is provided a method for producing a heat sealed article, said method comprising the steps of:
A) having a film of at least one polymeric layer made mode from a metallocene employed in the form of a complex with an activator and comprising a copolymer comprising (a) from 99.5 to 85 weight percent propylene units; and (b) from 0:5 to 15 weight percent ethylene units, and
B) applying a heat source to at least a portion of the propylene copolymer film and rising the temperature to from 10°C to 25°C below the melting point of the copolymer.

Another embodiment of the invention relates to a method to produce a heat sealed article, and the articles produced by this method, comprising the steps of:
A) having a film of at least two polymeric layers, at least one layer made from a metallocene employed in the form of a complex with an activator and comprising a copolymer comprising a:
   (a) from 99.5 to 85 weight percent propylene units and
   (b) from 0.5 to 15 weight percent ethylene units;
B) placing at least a portion of the propylene copolymer film layer into contact with a surface or another layer;
C) raising the temperature at the contact point in the range of 10°C to 25°C below the melting point of the copolymer.

The metallocene is preferably a bridged, biscyclopentadicnyl, Groups 4, 5 or 6 transition metal, dihalide or dialkyl derivative. Even more preferred metallocenes include bridged bisindenyl, Group 4 dihalide derivatives, Specific metallocene catalysts known to be useful for producing isotactic polypropylene are desired. The metallocene is preferably supported on an inert carrier and is optionally prepolymcrizcd with an olefin monomer.

### BRIEF DESCRIPTION OF THE DRAWINGS:

Figure 1 illustrates depression of polypropylene melting point by comonomer incorporation.

Figure 2 illustrates a general curve of seal strength versus seal temperature for polymers.

Figure 3 illustrates tensile modulus versus DSC peak melting point of polypropylene copolymers.

### DETAILED DESCRIPTION OF THE PREFERRED EMBODIMENTS:

### Introduction:

Heat sealing is widely used in the packaging industry to join polymer films. There are many different types *of* heat sealing techniques including jaw-type, bar sealers, rotary sealers, band sealers, impulse type sealers, bead sealers, hot knife, side-weld, radio frequency, hot air, and sonic wave sealers to name a few of the techniques. In heat sealing techniques, at least two films, or portions of film, are pressed together between heated platens or dies to achieve fusion at the interface between films. To achieve high production rates in commercial practice, the time of contact between the platens and films, i.e. the dwell time, is short, generally on the order of a second or preferably less. The seal strength, toughness, failure mode and appearance of such seals after cooling to room temperature are important seal properties.

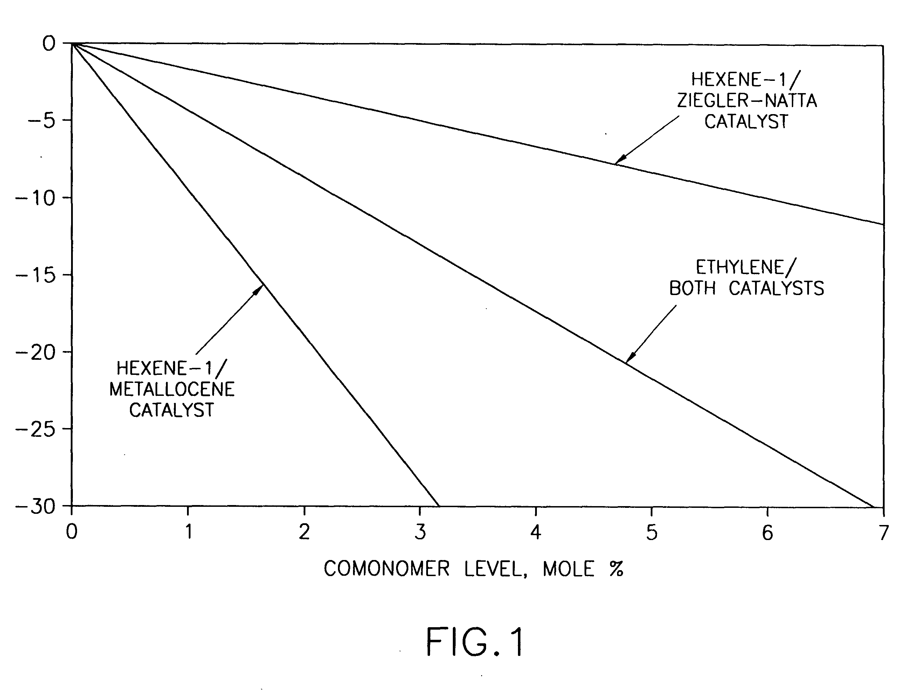

The sophistication of packaging materials and the need for improved productivity in recent years has generated increased interest for improved sealing resins. It has been discovered that heat seal behavior of films can be controlled by comonomer content. It has further been found that metallocene catalysts produce polypropylene copolymers having lower plateau initiation temperature, and higher modulus and hot tack values than conventional polypropylene of similar melting point and comonomer. Although it is known that as comonomer levels increase, melting points decrease for polypropylene, we have discovered a correlation between the type of comonomer and the amount employed and its impact on melting point, heat seal behavior, hot tack, and modulus. We have found that generally, ethylene does not depress the melting point of polypropylene as significantly as the higher alpha olefins (HAO) when polymerized by metallocene catalysts. HAO is defined as olefins having five carbon atoms or greater. As seen from Figure 1, plotting melting point depression versus comonomer level, the slope of the line varies based on the particular comonomer employed. A greater depression is observed when hexene-1 is incorporated into polypropylene as compared to the depression observed when ethylene is incorporated into polypropylene. For ethylene incorporation, there was no significant difference observed in the amount of melting point depression based on whether the polypropylene was conventionally or metallocene catalyzed. There was a significant depression differential observed based on hexene-1 and polymerization catalyst. A greater depression is observed for hexene-1 incorporated into metallocene catalyzed polypropylene as compared to hexene-1 incorporated into conventionally catalyzed polypropylene. Additionally, the higher the comonomer, the less molar amount is necessary to depress the melting point of the polypropylene. For a given melting point, a lower mole percent of hexene-1 comonomer is needed to depress the melting point of polypropylene compared to the mole percent needed of ethylene comonomer.

Generally, resins of the present invention employ propylene and one or more comonomer(s), the comonomers preferably being an alpha-olefin having from 2 to about 20 carbon atoms (excluding propylene), a diolefin, an ethylenically unsaturated monomer or a cyclic olefin. Ethylene is defined herein as an alpha-olefin. The metallocene produced polypropylene copolymers may be a blend of polypropylene and other polymer(s) with different properties. Applications of these polypropylene compositions having advantageous properties as described herein include diapers, medical gowns, snack food and tobacco packages, food wrappings, especially for temperature sensitive foods such as chocolate where a low PIT is beneficial.

For purposes of this invention, conventional polypropylene is that polymer produced from Ziegler-Natta catalysts having broad molecular weight distribution and composition distribution; metallocene polypropylene is that polymer produced from single-site, or cyclopentadienyl derivative transition metal catalysts, commonly producing narrow molecular weight distribution, narrow composition distribution, and narrow tacticity distribution polymer. Polypropylene refers to isotactic polypropylene copolymers or blends thereof Copolymers refers to propylene based polymer prepared from propylene and one or more other monomer(s). Modulus refers to tensile modulus as measured on compression molded samples and tested employing a modification of ASTM D638.

The principles embodied in the present invention are applicable to most processes where reduced temperature sealing is a value. Almost any thermoplastic fabrication process can benefit from these findings. Examples of melt forming processes which may benefit from reduced sealing or bonding temperatures include profile extrusion, sheet extrusion (optionally followed by thermoforming), film-extrusion and the like. Examples of uses for oriented film products made in accordance with the present invention include oriented film products for tobacco, snack packaging or other food wrap uses.

### Polypropylene of the Present Invention:

In the preferred embodiment of the present invention, copolymers include isotactic polypropylene and at least one other comonomer (or alpha-olefin), wherein the comonomer has between 2 and about 20 carbon atoms (excluding propylene comonomer). The copolymer has a lower melting point than copolymers produced from conventional catalysts having similar comonomer content. Exemplary comonomers include ethylene, butene-1, pentene-1, hexene-1, octene-1, 4-methyl-1-pentene, and the like. Particularly preferred comonomers include ethylene, butene-1, hexene-1, and octene-1, with a most preferred comonomer being hexene-1. The copolymers generally have a melting temperature in the range of 110°C to 135°C, preferably 112°C to 125°C, and most preferably 115°C to 123°C. In a preferred embodiment, the resins generally have a plateau initiation temperature of 10°C to 25°C less than the Tm of the copolymer. Preferably, the PIT is 10°C to 20°C and most preferably the PIT is 10°C to 15°C below the Tm of the copolymer.

In an embodiment of the present invention, propylene copolymers employed have a comonomer content in the range of 0.5 to 10 wt %. Preferred comonomer types and levels are dependent upon the application desired which in turn is dependent upon the plateau initiation temperature, and the modulus desired. Polymer mixtures or blends having 2 or more polymers may also be employed. Exemplary blends include propylene alpha-olefin copolymer blended with polyethylene, or a butene-1 copolymer, or an ethylene-propylene-elastomer. Generally, preferred comonomer types and levels for copolymers include ethylene, butene-1, hexene-1, and octene-1. Comonomers are generally in the range of 0.5 to 15 wt%, preferably 1 to 7 wt%, most preferably 4 to 6.5 wt%, and most most preferably 4.5 to 6.0 wt%, to achieve a plateau initiation temperature of at least 10°C to 25°C below the melting point of the resin. The present invention is discussed in terms of wt %, however the examples are illustrated in mole %. One of skill in the art will readily be able to convert between molar and weight percent values.

Instead of having the polypropylene produced by a metallocene catalyst, the polypropylene may be produced by other known catalysts, such as certain Ziegler-Natta catalyst which produce polymers having a narrow composition distribution as determined by temperature rising elution fractionation (TREF) as described in Wild et al., J. Poly Sci., Poly. Phys. Ed., 1982, Vol. 20, p. 441 and U.S. Patent 5,008,204, a narrow molecular weight distribution (MWD) as commonly determined by gel permeation chromatography, and a narrow tacticity distribution as commonly determined by ¹³C NMR analysis of the polymer. MWD is defined as the ratio of weight average molecular weight (Mw) over number average molecular weight (Mn). For purposes of this invention, MWD is generally in the range of 1 to 5, preferred MWD is in the range of 1.5 to about 3.5, most preferred is in the range of 1.6 to 2.5, and most most preferred is in the range of 1.8 to 2.2.

Additives may be included in the polymer compositions. These can be selected from additives commonly employed with plastics, such as fillers and/or reinforcements, strengthening fibers, plasticizers, colorants, dyes, flame retardants, antioxidants, antiblock agents, pigments, release agents, drip retardants and the like, in conventional amounts. Effective amounts are selected normally ranging from 0.05 to 0.2 wt % of the polymer.

The polypropylene copolymers of the present invention will generally exhibit melting points in the range of from about 110°C to about 135°C, although one of skill in the art will appreciate that melting point is in-part dependent upon the particular comonomer(s) and amount thereof employed with the polypropylene. Films prepared in accordance with the present invention will typically exhibit low n-hexane extractables, generally less than 10 wt % and preferably less than 4 wt%, and most preferably, less than 2.5 wt %, and are therefore desirable for products used in food and medical applications. Conventional polypropylene/ethylene melting temperature at 134°C was found to have an n-hexane 5.6% extractables at 50°C, while metallocene catalyzed polypropylene/ethylene having a melting temperature at 135°C had only 0.5% extractables at the 50C. Extractables testing was conducted in accordance with 21 CFR 177.1520 (d)(3)(ii).

Useful melt flow rates (MFR), as measured by ASTM D-1238, of the polymers of the present invention are in the range of from 0.1 to 200. In a preferred embodiment, the melt flow rates range from 0.5 to 50. Preferred MFR ranges for extrusion and molding applications are from 1 to 20, with most preferred being from 1 to 10. Oriented fibers produced by fibrillation or slitting of oriented film preferably have MFR ranges of 1 to 10, and most preferably a range of 1 to 5.

The polypropylene copolymers or blends may be produced by conventional means such as gas phase, slurry, bulk, solution or high pressure polymerization processes using a metallocene catalyst; multiple catalysts (2 or more metallocenes, or metallocene and one or more conventional catalyst) may also be employed. The copolymers may be produced in fluidized or stirred bed gas phase reactors, slurry or bulk reactors of tank or loop type or any other process practiced for the polymerization of propylene. The polymers may also be produced by use of multiple reactors of the type described herein. Preferably, a supported catalyst (metallocene plus some activator component on a support) is employed in a slurry or gas phase reactor to produce the polypropylene copolymer. Polymerization may occur under standard conditions. In a preferred embodiment, the copolymers are produced with supported metallocenes under slurry polymerization conditions. The supported metallocene is preferably prepolymerized with olefinic monomer, most preferably prepolymerized with ethylene monomer under standard prepolymerization conditions.

### Metallocenes Useful in Preferred Embodiments:

The invention is useful with any class of metallocenes including mono, di, or tri cyclopentadienyl radical systems or derivatives thereof. Monocyclopentadienyl moieties include, for example, those as disclosed in EPA 129,368, or US 5,055,438. Metallocenes as disclosed in US 4,808,561, 5,017,714, and 5,296,434, may also be employed in the present invention.

In the most preferred embodiment, the polypropylene copolymer employed is produced from at least one metallocene comprising bridged, biscyclopentadienyl, Groups 4, 5, or 6 transition metal, dihalide or dialkyl derivatives. Even more preferred metallocenes include silicon bridged bisindenyl, or substituted bisindenyl, Group 4 dihalide derivatives. Specific biscyclopentadienyl (or derivative) metallocene catalysts known to be useful for producing isotactic polypropylene are discussed in EPA Nos. 485,820; 485,821; 485,822; 485,823; 518,092; and 519,237; and, U.S. Pat. Nos. 5,145,819; 5,296,434.

The preferred metallocene employed in accordance with this invention are chiral and used as a racemate for the preparation of isotactic poly-1-olefins. Illustrative but non-limiting examples of metallocenes include: dimethysilybis(2-methylindenyl) zirconium dichloride, dimethylsilylbis(2-ethyl-4-phenylindenyl) zirconium dichloride, dimethylsilylbis(2-methyl-4-phenylindenyl) zirconium dichloride, dimethylsilylbis(2-methyl-5-isobutylindenyl) zirconium dichloride, dimethylsilylbis(2-methyl-4,5-benzindenyl) zirconium dichloride, and, dimethylsilylbis(2-methyl-4,6-diisopropylindenyl) zirconium dichloride. The most preferred specific metallocene is dimethylsilylbis(2-methyl-4,5-benzindenyl) zirconium dichloride. Generally, the metallocenes are prepared by a multi-step process involving repeated deprotonations/metallations of the aromatic ligands and introduction of the bridge and the central atom by their halogen derivatives. The reader is referred to the Organometallics, 13(3), 1994, pp. 954-963, and EP-A-320,762, for preparation of the metallocenes described. Organometallics and the EPA '762 are herein incorporated by reference in their entirety for U.S. patent practice purposes. Although silyl bridge and zirconium transition metal is specifically disclosed, one of skill in the art would appreciate that other types of bridging systems and transition metals may be employed.

The metallocene employed is preferably supported on an inert carrier and optionally prepolymerized. Numerous support techniques are known in the art. Most preferred is the technique employed in accordance with US Pat. 5,240,894. As disclosed previously, a preferred embodiment employs a prepolymerized supported metallocene. The prepolymer may be any alpha-olefin, preferably polyethylene, polypropylene, or polybutene-1, or mixtures thereof, most preferably polyethylene prepolymer.

The metallocene is employed during polymerization in the form of a complex of the metallocene with an activator. Activators may be alumoxane, as is well bown in the art, or ionic activators such as disclosed in U. S. Pat. 5,198,401 or 5,278,119. It is believed that any compound which serves to activate the metallocene to a catalytic state is applicable to this invention.

### Films and Sheets:

The present invention will find its most common application in heat sealable films, either oriented or non-oriented. The films may be produced by techniques known to those of skill in the art. For example, blown films produced with an annular die and air cooling, or cast films using a slot die and a chill roll for cooling are acceptable techniques. Films are generally in the range of about 0.2 to about . 10 mils (5 to 254 microns), however, total thickness may vary based upon the desired application. Sheets are a precursor to films and significantly thicker than films. Sheets may be prepared by conventional techniques such as extruding a substantially flat profile from a die. Prior to stretching and thus forming films, the sheets will generally have a thickness of from about 10 to about 75 mils (254-1905 microns), although they may be substantially thicker.

The films of the present invention may be in either mono-or multi-layer (composite) form, preferably multilayer form to be used in heat sealed articles. Composites would include at least a first skin layer and at least one other layer. Composites may be formed by (1) coextrusion followed by orientation, (2) orientation of a film followed by lamination, or (3) orientation of a film followed by extrusion coating or (4) cast coextruded.

### Articles:

Extruded or molded articles may be fabricated by conventional techniques such as, profile extrusion, injection-molding, injection-blow molding, extrusion-blow molding, rotational molding, compression molding, or foam molding. Parts are found in many thicknesses, generally about 500 microns (20 mils) or greater. It is important that the resin be heated considerably above the melting point to randomize the molecules. Resins of the present invention allow lower temperatures for this heating process than conventional resins. Additionally, the increased modulus observed for metallocene catalyzed polypropylene polymer allows for a stiffer stand up article or film than those produced by conventional catalysts.

### Heat Seal and Plateau Initiation Temperature:

Polypropylene copolymers are commonly used as seal layer(s) on oriented polypropylene. The advantages of these copolymers as seal layers in comparison to very low or low density polyethylene resins is the excellent interlayer adhesion that can be obtained without the use of tie reins.

An important characteristic for a heat sealable film is the temperature at which sealing commences, i.e., the heat seal initiation temperature. Seal initiation temperature is defined as that temperature when the strength of the heat seal is 200 g/in ( 1.1 N/15mm).

Films or sheets produced within the scope of the present invention may be sealed at lower temperatures than currently known with conventional polypropylene. Lower sealing temperature has advantages in multilayer films wherein the sealing layer is produced from a polymer which melts at a lower temperature than the other layer(s).

For estimating heat sealing temperature of films, a graph of seal strength versus temperature for the polymer composition employed is useful. Figure 2 is an illustration of seal strength versus seal temperature for polymers. Seal strength is a function of temperature. The plateau initiation temperature (PIT) is generally defined as the onset temperature of the plateau region where the seal strength maximizes on the curve, or the temperature where the seal strength becomes independent of sealing temperature. Generally, the PIT corresponds to the temperature at which tearing failure occurs. Where a plateau is not well defined, the plateau initiation temperature is the temperature where a change in slope of seal strength versus seal temperature occurs. A point is reached in sealing temperature where the film, usually the core layer in a multilayer film, melts. Generally, this is seen at elevated seal temperatures (in the figure, this is the downward curve at the far right side).

When SIT is determined, the seal fails by peeling or delamination. At the PIT, the full strength seal or a value just below the full strength is measured and fuller seal development is said to be present. Just below or near the PIT the testing of the seal strength tears the film and the actual seal integrity is retained. We can thus define PIT by proximity to plateau region and by mode of film failure when measuring seal strength.

Because of variations in commercial heat bar temperatures during operation it is difficult to know precisely at what temperature the film is sealed. Accordingly, it is advantageous to utilizing heat seating resins having a broad heat sealing plateau. By operating at a midpoint on the plateau, minor variations in sealing temperature can be accommodating without materially affect on the seal strength.

Table I illustrates heat seal strength comparison of metallocene and conventionally catalyzed copolymers. The SIT is that specified at 200 g/in (1.1 N/15mm). ZN is Ziegler-Natta or conventionally catalyzed copolymer. MC is metallocene catalyzed copolymer. Commercially available polypropylene PD9282-E2 was obtained from Exxon Chemical Company, Baytown, Texas, which is a copolymer containing about 5 wt% ethylene. This commercially available product is representative of random copolymer polypropylenes widely used today in the industry as heat seal layer resins for polypropylene films. The resulting copolymer was compared to metallocene catalyzed polypropylene copolymers. Copolymers having between about 1 and about 4 wt % comonomer and having similar melting points and prepared under similar processing conditions were compared. With regards to melting point and PIT, it is observed that the metallocene produced polymers exhibit PIT values in the range of about 10°C to about 25°C less than the melting points. MC2, coextruded oriented polypropylene (OPP) film having a melting point of about 132°C was found to possess a PIT of about 120°C, a difference of 12°C. A ZN coextruded oriented polypropylene film having a melting point of about 133°C and prepared under similar process conditions, was found to have a PIT of about 130°C, a difference of only 3°C. Comparing conventional versus metallocene polypropylene cast coextruded films, it is found that for the metallocene copolymer, a 17°C difference in melting point and PIT is observed, while for the conventional copolymer, an 8°C difference is observed.

Accordingly, an embodiment of the present invention relates to a method to produce a heat seal comprising the steps of:
a) having a film of at least one layer, made from a copolymer comprising propylene and at least one comonomer, preferably an olefinic monomer, having between 2 and about 20 carbon atoms, excluding 3 carbon atoms, said propylene copolymer produced by a metallocene catalysts, and further having an MWD less than about 5, preferably less than 3.5, and a propylene tacticity distribution of greater than about 90% pentads, preferably greater than about 95% pentads, most preferably greater than about 98% pentads as determined by NMR analysis; and,
b) applying a heat source to at least a portion of the film at a temperature in the range of about 10°C to about 25°C below the melting point of the copolymer.

The heat source is typically a heat seal bar, however, for purposes of this invention, any source capable of heating up the film to form a weld will suffice. The temperature of the heat source is preferably in the range of about 10°C to about 20°C, and most preferably is about 10°C to about 15°C below the melting point of the copolymer. As an alternate embodiment, the heat source is 10°C below the melting point of the copolymer.

In another embodiment, films in accordance with the present invention have a plateau initiation temperature of at least about 10°C, or more, less than a similar processed film produced from Ziegler-Natta catalyzed copolymer having the same comonomer and similar melting point.

To determine the sealing range and seal strength of the preferred film two strips of film (15 mm wide) were superposed with the skin layer surfaces in contact. An electrical resistance heated flat sealing bar 5 mm wide was used to press the sheets together against a backing surface with a pressure of about 0.5 N/mm² for 0.5 seconds and the temperature of the sealing bar was recorded. The sample was then cooled to room temperature and aged. To determine seal strength, the force to tear apart the seal is measured. A one inch (2.54 cm) strip was cut perpendicular to and across the seal made by the bar, and the ends of the respective strips were placed in the jaws of an Instron testing machine with the seal located at approximately the mid point between the gripping jaws. Force was applied by driving the jaws apart until the seal either peeled or tore. Seals having a minimum strength considered sufficient for packaging applications, were achieved by the preferred embodiment at a seal bar temperature as low as 104°C.

The present invention takes advantage of these attributes of the metallocene resin to define a heat sealable process operable at lower temperatures than currently possible with today's conventional resins, but which yield a product substantially equivalent to today's best film products.

### Hot Tack:

Hot tack strength of a seal is the ability of the molten seal to resist a load. It is defined as the strength of the seal when tested immediately after heat sealing, before the sample cools. The hot tack strength will therefore be lower than the "cold seal" strength. This is a key property in some packaging applications, particularly involving vertical form-fill-seal packaging where the packing material is placed into the package immediately after making the bottom seal.

Hot tack is important to manufactures because hot tack strength of a heat sealable product is needed in order to maintain the integrity of the molten seal when subjected to stress. Especially on high speed form-fill and packaging machines, the hot tack of a polymer at seal temperature is important to resist stress while the seal is still in molten/semi-molten state.

Factors contributing to hot tack include hot tack force, film processing, comonomer type and content.

Films produced in accordance with the present invention have been found to have a hot tack of at least about 20%, or more, at the same temperature, greater than a Ziegler-Natta catalyzed copolymer having the same comonomer, similar melting point, and/or similar film processing.

Table 2 illustrates hot tack strength comparison for several examples of metallocene and conventionally catalyzed propylene-ethylene and propylene-hexene-1 copolymers processed as cast monolayers or cast coextruded multilayer films. It is observed that a conventional copolymer, cast monolayer film having a melting point of about 133°C was found to have a hot tack value at 100°C of about 95 g/inch (0.55 N/15mm). A metallocene copolymer, cast monolayer film having a melting point of about 132°C possessed a hot tack value at 100°C of about 151 g/in. Comparing cast coextruded, metallocene and conventionally catalyzed polypropylene copolymers, one finds a hot tack value at 100°C to be 256g/in (1.48 N/15mm) and 384g/in (2.22 N/15mm) respectively.

Increased hot tack values translates into higher line speed since less cooling time is required before continuing package expansion and product loading in a commercial process. As can be observed, metallocene catalyzed copolymers provide greater hot tack, compared to conventionally catalyzed copolymers.

### Higher Modulus:

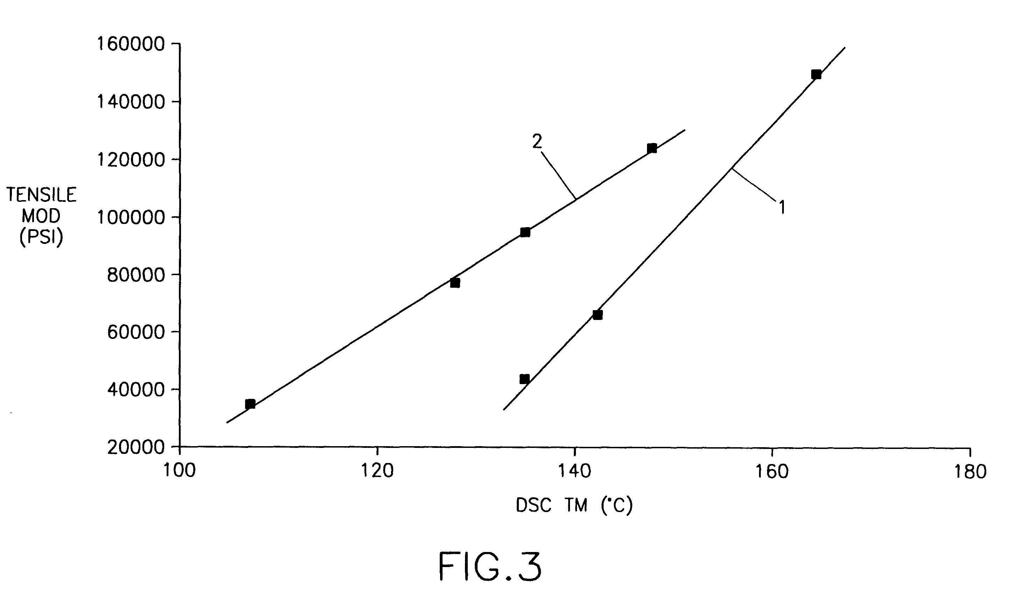

Tensile modulus is a measure of the inherent stiffness of a material. Tensile modulus versus temperature for conventional and metallocene polypropylenes were measured and plotted in Figure 3. Compression molded samples were evaluated for tensile modulus. The tensile modulus was derived from Instron testing of homogeneous compression molded samples under modified ASTM D638 test conditions. The modifications involved a jaw separation of 1.0 in (2.54 cm), and a crosshead speed of 2.0 in/min. (5.1 cm/min.). Melting temperature for the polymers was derived from Differential Scanning Colorimetry (DSC) measurement, a widely-used tool to quantify thermal transitions in polymers. The peak temperature of the melting endotherm was used to quantify the melting temperature. Data plotted in Figure 3 illustrates a trend observed between metallocene and conventionally catalyzed polymers, and does not differentiate as between specific copolymers evaluated. The copolymers evaluated were propylene-ethylene and propylene-hexene-1 copolymers.

The metallocene catalyzed polypropylenes provided a different balance of modulus versus melting temperature, when compared with conventionally catalyzed polypropylenes. Figure 3 demonstrates this behavior. This different behavior affords benefits in heat sealing application where sealability at lower temperature coupled with high stiffness for good "stand-up" package behavior, is a desired property balance. Also the higher stiffness indicates higher crystallinity which provides higher barrier (e.g., oxygen, air, gas, and the like) properties.

The data in Figure 3 indicate that at a melting temperature at about 135°C (typical for today's random copolymer, polypropylene/ethylene, used in sealing application), the modulus, or inherent stiffness, of the metallocene catalyzed product is more than that of conventional polypropylene. Alternatively, the metallocene catalyzed polypropylene allows, at the same modulus or stiffness, a substantial lowering in melting temperature, which translates to a lowering in the heat seal temperature. Those skilled in the art will recognize the advantages in packaging speed and lowering of package rejects (due to poor/inadequate sealing) afforded by the opportunity to reduce the sealing temperature.

### Miscellaneous Adyantages:

Oriented heat sealed films or products therefrom produced from metallocene catalysts are expected to possess moisture (or water) vapor transmission rate (MVTR) properties at least similar to products formed from resins of conventional catalysts. Moisture vapor transmission rates are indicators of the film's ability to serve as a barrier for water or moisture. With the current processes for forming heat seal films and articles from conventional resins, the MVTR will deteriorate as the melting point of the resin is decreased. With the present invention, the lower melting point of the resin, and reduced processing temperature is achieved without compromising the moisture vapor barrier properties of the final film. Indicators are present suggesting that improved modulus also leads to improved barrier properties in a sample.

### Method of Producing Heat Sealed Structures:

In an embodiment of the invention, a method to produce a heat sealed film or article comprises the steps of:
a) having a film of at least one layer, made from a copolymer comprising propylene and at least one comonomer, preferably an olefinic monomer, having between 2 and about 20 carbon atoms, excluding 3 carbon atoms, said propylene copolymer produced by a metallocene catalyst; and,
b) applying a heat source to at least a portion of the film at a temperature in the range of about 10°C to about 25°C below the melting point of the copolymer.

A modified embodiment of the invention relates to a method to produce a heat sealed article, and the articles produced by this method, comprising the steps of:
a) having a film as described herein,
b) placing at least a portion of the propylene copolymer film layer into contact with a surface or another layer; and,
c) raising the temperature at the contact point in the range of about 10°C to about 25°C below the melting point of the copolymer. The surface or layer may be a woven fiber or nonwoven layer, a metallic foil, cardboard surface, or the like.

As discussed earlier, most typically, the polypropylene film will be in contact with a core or a substrate, for example, another film, a surface, or an article or object, so as once the heat source is applied to a particular point on the polypropylene film, a heat seal at the contact point is formed. An envisaged application of this embodiment, is the formation of snack packages where a film is folded over, two points of the film are united, and a seal is established to form a bag. Alternatively, a polypropylene film may be united with a fabric and a seal formed at the contact point, such as for forming a diaper or gown.

This methods described above result in films or articles produced at lower temperatures than conventionally catalyzed polypropylene films or articles. These films or articles possess good optical properties and PITs which are commercially attractive and suitable for high speed line applications.

### EXAMPLES

The following illustrative, but non-limiting examples will further illustrate the invention. They are not to be construed to limit the claims in any manner. The metallocene employed may be prepared by published literature procedures.

### Preparation of the Supported Metallocene Catalyst

To an eight-liter vessel equipped with a cooling jacket and an efficient overhead stirrer was added methylalumoxane (30 wt% in toluene, 925 ml). With Stirring, a suspension of rac-dimethylsilandiylbis(2-methyl-4,5-berzoindenyl)-zirconium dichloride (5.0 g) in toluene (700 ml) was added under N₂ through a double-ended needle. After stirring for 10 minutes, dehydrated silica (Davison 948, dried at 800°C, 200 g) was added to the solution over 20 minutes. The slurry was stirred for 10 minutes and then, while a vacuum was applied from the top of the vessel, a slight flow of N₂ was added through the bottom . The mixture was heated to 70°C as the solvent was evaporated over a 9 hour period. The dry solid was cooled to ambient temperature overnight. Isopentane (5 liters) was added to slurry the solids and the mixture cooled to 0°C. Ethylene was added to the stirred mixture by a dip tube at a rate of 0.03-0.06 SCF/minute until a total of 491 liters of ethylene had been added. Agitation was stopped and the solids allowed to settle. The liquid was decanted from the solids, which were washed twice, each with 1.5 liters of isopentane. The prepolymerized wet solids were transferred to a dry-box under N₂ and filtered through a #14 mesh sieve. The fine particles were filtered off, washed with pentane (4 liters) and dried in vacuo. Yield: 326g.

### Laboratory Ethylene Copolymerization Experiment:

### Preparation of Copolymers

1. A 2-liter autoclave reactor containing triethylaluminum (0.5 ml of a 1 M solution in hexane) was pressurized to 6.9 bars (100 PSI) with ethylene. After introducing the ethylene, 1000 mls of propylene were added, and the reaction vessel was heated to a temperature of 45°C. A sample of the supported catalyst was slurried in 2 mls of hexane was flushed into the reactor with an additional 250 mls of propylene. The reaction was run for 0.5 hours, at which time, the reactor was cooled, vented, and purged with nitrogen for 20 minutes. After the nitrogen purge, the reactor was opened, and the propylene-ethylene copolymer product was collected and dried in vacuo for a minimum of 2 hours at 75°C.

| **Example** | **Catalyst (mg)** | **Polymer Yield (g)** | **Mw/Mn** | **DSC (C)** | **C**_{**2**}**= (wt%)** |
|---|---|---|---|---|---|
| MC1 | 213 | 114 | 1.84 | 121 | 3.4 |
| MC5 | 203 | 102 | 1.71 | 121 | 3.4 |

2. A 2-liter autoclave reactor containing triethylaluminum (0.5 ml of a 1 M solution in hexane) was pressurized to 6.9 bars (100 PSI) with ethylene. After introducing the ethylene, 1000 mls of propylene were added, and the reaction vessel was heated to a temperature of 45°C. A sample of the supported catalyst was slurried in *2* mls of hexane was flushed into the reactor with an additional 250 mls of propylene. The reaction was run for 1.0 hours, at which time, the reactor was cooled, vented, and purged with nitrogen for 20 minutes. After the nitrogen purge, the reactor was opened, and the propylene-ethylene copolymer product was collected and dried in vacuo for a minimum of 2 hours at 75°C.

| **Example** | **Catalyst (mg)** | **Polymer Yield (g)** | **M**_{**w**}**/M**_{**n**} | **DSC (°C)** | **C**_{**2**}**= (wt%)** |
|---|---|---|---|---|---|
| MC3 | 208 | 192 | 1.77 | 118. | 3.6 |

3. A 2-liter autoclave reactor containing triethylaluminum (0.5 ml of a 1 M solution in hexane) was pressurized to 3.5 bars (50 psi) with ethylene. After introducing the ethylene, 1000 mls of propylene were added, and the reaction vessel was heated to a temperature of 55°C. A sample of the supported catalyst slurried in 2 ml hexane was flushed into the reactor with an additional 250 mls of propylene. the reaction was run for 0.5 hours, at which time, the reactor was cooled, vented, and purged with nitrogen for 20 minutes. After the nitrogen purge, the reactor was opened, and the product was collected and dried in vacuo for a minimum of 2 hours at 75°C.

All ethylene copolymers were compounded with the same stabilizer, antiblock, and neutralizer as PD9282-E2 control polypropylene.

| **Example** | **Catalyst (mg)** | **Polymer Yield (g)** | **Mw/Mn** | **DSC (°C)** | **C**_{**2**}= **(wt%)** |
|---|---|---|---|---|---|
| MC6 | 210 | 203 | 1.73 | 132 | 1.5 |

### Laboratory Hexene Copolymerization Experiment:

4. A 2-liter autoclave reactor was treated with a desired amount triethylaluminum solution (1 M solution of TEAL in hexane). Then 50 mls of hexene-1 comonomer was added to the reactor. After introducing the hexene, 1000 mls of propylene were added, and the reaction vessel was heated to a temperature of 60°C. A sample of the supported catalyst was slurried in 2 mls of hexane was flushed into the reactor with an additional 250 mls of propylene. The reaction was run for the desired length of time, at which point, the reactor was cooled, vented, and purged with nitrogen for 20 minutes. After the nitrogen purge, the reactor was opened, and the propylene-hexene copolymer product was collected and dried in vacuo for a minimum of 2 hours at 75°C. Three runs, -1, -2, -3, were blended after drying and used as MC-4. MC4 was compounded with the same stabilizer, antiblock, and neutralizer as PD9282-E2 control propylene.

| **Run #** | **Catalyst (mg)** | **TEAL (ml)** | **Time (hr)** | **Polymer Yield (g)** | **Mw/Mn** | **DSC (°C)** |
|---|---|---|---|---|---|---|
| MC4-1 | 209 | 0.5 | 1.0 | 36 | 1.76 | 123.3 |
| MC4-2 | 308 | 0.5 | 1.0 | 79 | 1.73 | 123.4 |
| MC4-3 | 311 | 1.0 | 2.0 | 84 | 1.74 | 126.3 |

### Continuous Ethylene Copolymerization Procedure:

5. The sample designated as MC2 was produced in a series reactor, bulk liquid phase polymerization process. The reactor was equipped with an agitator and a jacket for removing the heat of polymerization. The reactor temperatures were set at 59°C/54°C (lead/tail reactor temperatures), and catalyst was fed only to the lead reactor at a rate of 6.0 g/hr of prepolymerized supported catalyst. Propylene was fed to the reactors at rates of 63.5/36.3 kg/hr (lead/tail), and ethylene was fed at a rate of 0.45 kg/hr to both reactors. Under these conditions, the total residence time of the catalyst in the process was 5.1 hours. The copolymer was produced at a rate of 7.7 kg/hr. The product was determined to have an ethylene incorporation of 1.4 wt%, with a melting point of 132°C. MC2 was compounded with the same stabilizer, antiblock, and neutralizer as PD9282-E2 control polypropylene.

### Control ZN Copolymers

6. Conventional polypropylene commercially available from Exxon Chemical Company, Baytown Texas, PD9282E2 and PD4252, were employed.

PD9282E2 is compounded with Irganox 1010 as heat stabilizer, Syloblock 48 as antiblock, and DHT-4TA as neutralizer. PD4252 contains Irganox 1010 as heat stabilizer and calcium stearate as neutralizer.

Polypropylene with three melt flow rate was used in formation of the coextruded cast film core layer. The heat seal layer control polymer used in the Examples ZN 1 through 4 was polypropylene-ethylene Escorene PD9282E2 with a melting temperature of 133°C.

### Preparing Film Samples:

Cast films employed in the following Examples were prepared as either monolayer (A) or coextruded multilayer (AB) structures. The copolymers of the Examples were formed as cast films by melt extrusion through a slit die followed by passage over a 90-100°F (32.2 - 37°C) water chilled roll.

All films were prepared on one of two film lines. AB 10:90 films with a width of 8" (20.32 cm) and 0.020 inches (0.0508 cm) thickness before heat stretching/orientation (see procedure below) of Examples ZN 2 and MC 2 were prepared on a 3-extruder, cast coex film line from Killion Extruders. Resin was formed as AB coextruded film after extrusion through 1" (2.54 cm) screw (for the film core layer) and 3/4" (1.91 cm) screw (for the heat seal layer). The screw of the Killion was 24:1 L/D with maximum outputs of 20 lbs/hr (9.1 kg/hr) and 10 Ibs/hr (4.5 kg/hr) respectively. A screw rate of 95-112 rpm and a ramped 375° - 450°F (190-232 °C) temperature profile were employed. Cast films of total thickness of 0.002 to 0.020 inches (0.005 to 0.050 cm) were collected at about 15 feet per minute (4.5 m/min).

Coextruded films of Examples ZN 2 and MC 2 were stretched while heating to form coextruded oriented polypropylene, commonly referred to as OPP films, of 0.002 inches (0.005 cm) on a T.M. Long plastic stretcher prior to heat seal formation and measurement.

The A and AB cast films of Examples ZN 1, ZN 3, ZN 4, MC 1, MC 3, MC 4, MC 4, MC 5, and MC 6, with widths of 2" (5.1 cm) and 0.020 inches (0.05 cm) thickness were prepared on a Randcastle Inc. (31 Hopson Ave., Little Falls, NJ 07424) Model RC-025 Microtruder. The Microtruder requires about 25-50 grams of resin. The screws are 1/4" (0.64 cm) in diameter with a 24:1 L/D. Screw speeds of 5 to 65 rpm, depending on the desired thickness of the individual core or heat seal layer, were employed.

### Testing Samples

Heat seal and hot tack evaluation was performed after controlled heating on the DTC Hot Tack Tester, Model 52-D. Hot Tack was performed according to ASTM D 3706-88, Flat Spring Test, after aging at least 24 hours. Hot Tack strength is measured directly with the DTC Model 52-D.

Standard conditions were used in both procedures. The conditions are listed in the following table.

| **Condition** | **HEAT SEAL** | **HOT TACK** |
|---|---|---|
| Sealing Time | 0.5 sec | 0.5 sec. |
| Sealing Pressure | | |
| On seal | 0.5 N/mm2 | 0.5 N/mm2 |
| on Test strips | 37.5 N | 37.5 N |
| Delay Time | N/A | 0.4 sec |
| Peel Rate | N/A | 200 mm/sec |
| Specimen Width | 15 mm | 15 mm |
| Seal Bar Width | 5 mm | 5 mm |
| Temperature Range | 5°C intervais | 5°C intervals |

Heat Seal specimens were aged for 48 hours at controlled laboratory temperature and humidity before strength measurements. An Instron Model 1122 interfaced with a Compac 386S computer was used to determine strength. An Instron crosshead speed of 130 mm/min. was employed.

The measured values were determined by the following methods:
1. Melting Point - DSC measurement, maximum of melting curve, rate of heating 10°C /minute.
2. Plateau Initiation Temperature, as recited in the specification:
3. Modulus - Modified ASTMD638 as recited herein:
4. Gel Permeation Chromatography (GPC) is a liquid chromatograph technique widely used to measure the weight average molecular weight and molecular weight distribution or polydispersity of polymers. A Waters model 150C chromatograph, 3 Shodex AT-80M (mixed bed) columns and 1,2,4-trichlorobenzene (HPLC grade) as solvent was employed at 145°C with a flow rate of 1 ml/min., for a run time of 60 minutes, and total injection volume employed was 300 microliters.
5. 13C-NMR was utilized to quantity the comonomer level in the copolymer samples. This is a well accepted spectroscopic technique, widely used in the art.

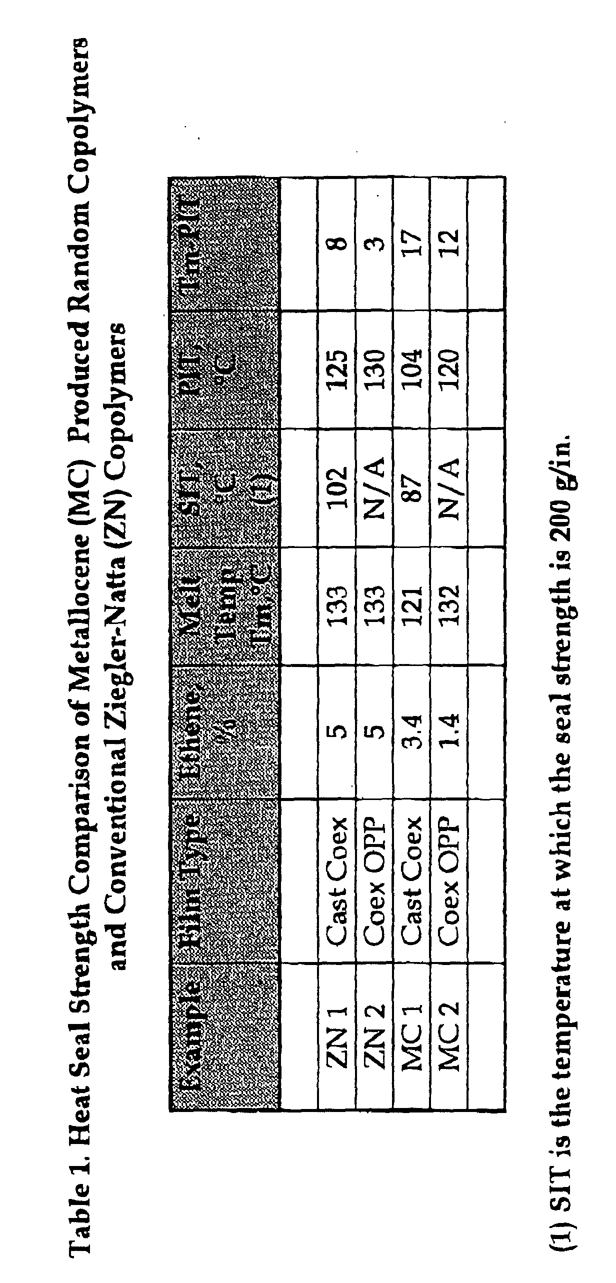

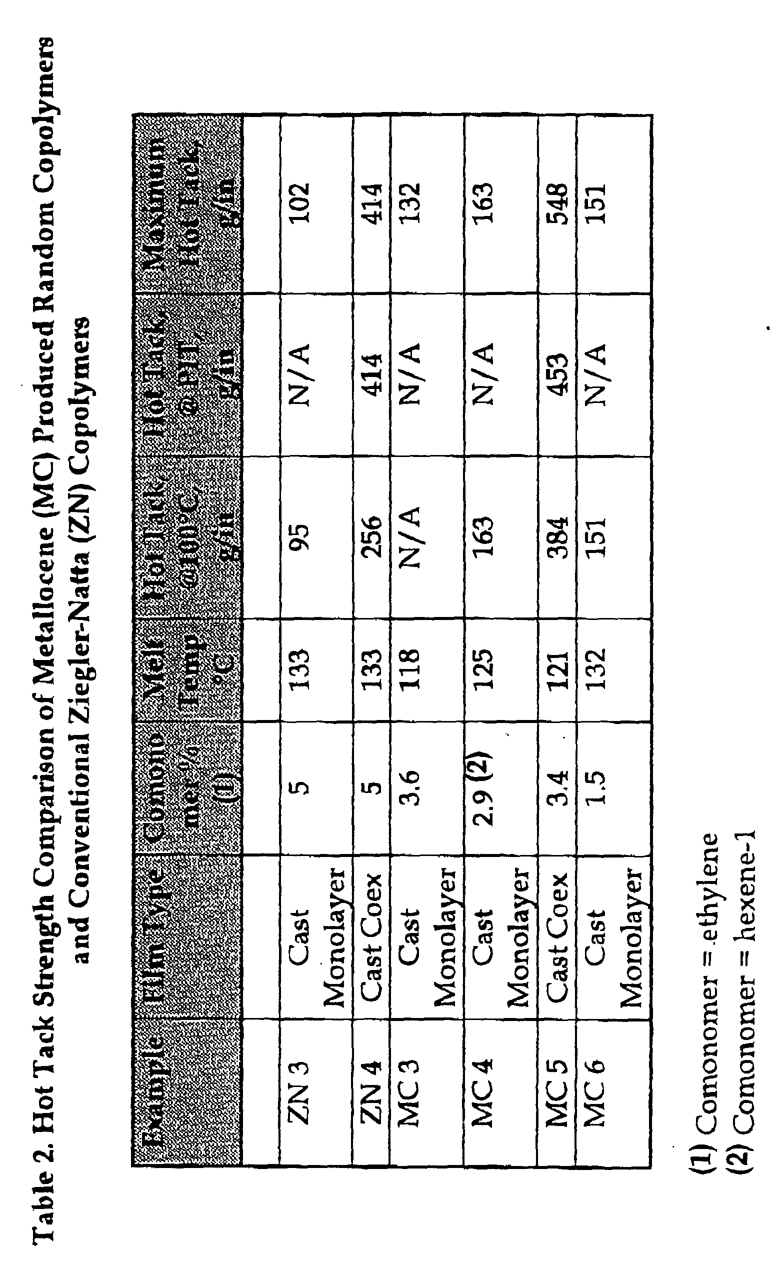

## Claims

1. A method for producing a heat sealed article, said method comprising the steps of:
A) having a film of at least one polymeric layer made from a metallocene employed in the form of a complex with an activator produced polymers and comprising a copolymer comprising (a) from 99.5 to 85 weight percent propylene units; and (b) from .5 to 15 weight percent ethylene units, and
B) applying a heat source to at least a portion of the propylene copolymer film and raising the temperature to from 10°C to 25°C below the melting point of the copolymer.

2. The method of claim 1 wherein temperature is in the range of from 10°C to 15°C below the melting point of the copolymer.

3. The method of claim 1 or 2 wherein the comonomer content is in the range of 0.5 to 10 wt. %

4. The method of any of the preceeding claims wherein the metallocene comprises a silicon- bridged bis(substituted indenyl) Group 4, 5, or 6 transition metal dihalide.

5. The method of claim 4 wherein the metallocene is selected from the group of dimethylsilylbis(2-methylindenyl) zirconium dichloride, dimethylsilylbis(2-methyl-4,5-benzindenyl) zirconium dichloride, dimethylsilylbis(2-methyl-4,6-diisopropylindenyl) zirconium dichloride, dimethylsilylbis(2-methyl-4-phenylindenyl) zirconium dichloride.

6. The method of claim 5 wherein the metallocene is dimethylsilylbis(2-methyl-4,5-benzindenyl) zirconium dichloride.

7. The method of any of the preceeding claims wherein the metallocene is supported on a carrier.

8. A method of producing a heat sealed article according to any preceding claim comprising the steps of:
A) having a film of at least two layers, at least one layer being the propylene copolymer layer;
B) placing at least a portion of the propylene copolymer film layer into contact with a surface or another layer:
C) raising the temperature at the contact point in the range of 10°C to 25°C below the melting point of the polymer.

9. An article produced by the method of any preceding claim.

## Patentansprüche

1. Verfahren zur Herstellung eines heißgesiegelten Gegenstands, bei dem
A) eine Folie aus mindestens einer polymeren Schicht vorhanden ist, die aus mit Metallocen hergestellten Polymeren gefertigt ist, das in Form eines Komplexes mit Aktivator verwendet wird, und Copolymer umfasst, das (a) 99,5 bis 85 Gew.% Propyleneinheiten und (b) 0,5 bis 15 Gew.% Ethyleneinheiten umfasst, und
B) eine Wärmequelle auf mindestens einen Teil der Propylencopolymerfolie angewendet wird und die Temperatur auf 10°C bis 25°C unter den Schmelzpunkt des Copolymers erhöht wird.

2. Verfahren nach Anspruch 1, bei dem die Temperatur im Bereich von 10°C bis 15°C unter dem Schmelzpunkt des Copolymers liegt.

3. Verfahren nach Anspruch 1 oder 2, bei dem der Comonomergehalt im Bereich von 0,5 bis 10 Gew.% liegt.

4. Verfahren nach einem der vorhergehenden Ansprüche, bei dem das Metallocen siliciumverbrücktes bis(substituiertes Indenyl)-Gruppe 4, 5 oder 6-Übergangsmetalldihalogenid umfasst.

5. Verfahren nach Anspruch 4, bei dem das Metallocen ausgewählt ist aus der Gruppe aus Dimethylsilylbis(2-methylindenyl)zirconiumdichlorid,Dimethylsilylbis(2-methyl-4,5-benzindenyl)-zirconiumdichlorid, Dimethylsilylbis(2-methyl-4,6-diisopropylindenyl)zirconiumdichlorid, Dimethylsilylbis(2-methyl-4-phenylindenyl)zirconiumdichlorid.

6. Verfahren nach Anspruch 5, bei dem das Metallocen Dimethylsilylbis(2-methyl-4,5-benzindenyl)zirconiumdichlorid ist.

7. Verfahren nach einem der vorhergehenden Ansprüche, bei dem das Metallocen auf einen Träger aufgebracht ist.

8. Verfahren zur Herstellung eines heißgesiegelten Gegenstands nach einem der vorhergehenden Ansprüche, bei dem
A) eine Folie mit mindestens zwei Schichten vorhanden ist, von denen mindestens eine Schicht die Propylencopolymerschicht ist,
B) mindestens ein Teil der Propylencopolymerfolienschicht in Kontakt mit einer Oberfläche oder einer anderen Schicht gebracht wird,
C) die Temperatur am Kontaktpunkt in den Bereich von 10°C bis 25°C unter dem Schmelzpunkt des Polymers erhöht wird.

9. Gegenstand, der nach dem Verfahren gemäß einem der vorhergehenden Ansprüche hergestellt ist.

## Revendications

1. Procédé pour la production d'un article thermosoudé, ledit procédé comprenant les étapes consistant :
A) à prendre un film d'au moins une couche polymère, formé à partir de polymères produits au moyen d'un métallocène, utilisé sous forme d'un complexe avec un activateur, et comprenant un copolymère comprenant (a) 99,5 à 85 % en poids de motifs propylène ; et (b) 0,5 à 15 % en poids de motifs éthylène ; et
B) à appliquer une source de chaleur à au moins une partie du film de copolymère de propylène et à élever la température à une température inférieure de 10°C à 25°C au point de fusion du copolymère.

2. Procédé suivant la revendication 1, dans lequel la température est inférieure de 10°C à 15°C au point de fusion du copolymère.

3. Procédé suivant la revendication 1 ou 2, dans lequel la teneur en comonomère est comprise dans l'intervalle de 0,5 à 10 % en poids.

4. Procédé suivant l'une quelconque des revendications précédentes, dans lequel le métallocène comprend un dihalogénure de bis-(indényle substitué) de métal de transition du Groupe 4, 5 ou 6, ponté avec le silicium.

5. Procédé suivant. la revendication 4, dans lequel le métallocène est choisi dans le groupe consistant en le dichlorure de diméthylsilylbis-(2-méthylindényl)-zirconium, le dichlorure de diméthylsilylbis-(2-méthyl-4,5-benzindényl)-zirconium, le dichlorure de diméthylsilylbis(2-méthyl-4,6-diisopropylindényl)-zirconium et le dichlorure de diméthylsilylbis-(2-méthyl-4-phénylindényl)-zirconium.

6. Procédé suivant la revendication 5, dans lequel le métallocène consiste en dichlorure de diméthylsilylbis-(2-méthyl-4,5-benzindényl)-zirconium.

7. Procédé suivant l'une quelconque des revendications précédentes, dans lequel le métallocène est fixé sur un support.

8. Procédé pour la production d'un article thermosoudé suivant l'une quelconque des revendications précédentes, comprenant les étapes consistant :
A) à prendre un film constitué d'au moins deux couches, au moins une couche étant la couche de copolymère de propylène ;
B) à placer au moins une partie de la couche constituée d'un film de copolymère de propylène en contact avec une surface ou une autre couche ;
C) à élever la température au point de contact à une température inférieure de 10°C à 25°C au point de fusion du polymère.

9. Article produit par le procédé suivant l'une quelconque des revendications précédentes.
